# EUROPÄISCHE PATENTANMELDUNG

(11) **EP 0 593 141 A1**
(43) Veröffentlichungstag der Anmeldung: **20.04.1994**
(21) Anmeldenummer: 93250259.4
(22) Anmeldetag: 23.09.1993
(51) Int. Cl.: B26F 1/38, B26D 7/27

(54) **Zeichen- und Schneidvorrichtung ausgerüstet mit einer Sprühvorrichtung**

(30) Priorität: 15.10.1992 DE 4235230
(71) Anmelder: Aristo Graphic Systeme GmbH & Co KG, D-22525 Hamburg (DE)
(72) Erfinder: Rathke, Stefan, D-25469 Halstenbek (DE)
(74) Vertreter: UEXKÜLL & STOLBERG

(57) **Zusammenfassung**

Die Erfindung betrifft eine Sprühvorrichtung für Flüssigkeiten wie Farbe, Tinte, Tusche oder Klebstoff, zum Besprühen von Folienmaterial, das in einer Folienschneidvorrichtung zuvor geschnitten wird, wobei die Folienschneidvorrichtung ein Gehäuse (100) aufweist, welches Führungsstangen (111, 112) trägt, die sich quer über die Bewegungsrichtung des Folienmaterials erstrecken und auf denen ein Schlitten (109) quer zur Bewegung des Folienmaterials in Y-Richtung verschiebbar ist. Eine Transporteinrichtung dient zum Transportieren des Folienmaterials in X-Richtung unter dem Schlitten (109) hindurch. An dem Schlitten (109) ist ein Sprühkopf (27) mit einem zugehörigen Farbbehälter (26) angeordnet. Ein Magnetventil (38) steuert die Zufuhr von Druckluft zu dem Sprühkopf (27).

## Beschreibung

Die Erfindung betrifft eine Sprühvorrichtung gemäß dem Oberbegriff des Patentanspruchs 1.

Als Zeichengerät ist neben Tuscheschreibern und Zeichenstiften auch bereits eine sogenannte Air-Brush bekannt, mit der ein feiner Farbsprühkegel dosiert auf eine Unterlage aufgebracht werden kann. Die Zufuhr der Farbe erfolgt durch einen Zentralkanal, in dem eine Nadel sitzt, welche den Querschnitt der Ausstoßöffnung vergrößert oder verkleinert und dadurch den Farbzufluß reguliert. Die Ausstoßöffnung wird von einem Luftkanal umgeben, in den Druckluft mit etwa 0,5 bis 2,5 Bar zugeführt wird. Die Druckluft reißt die Farbe aus der Ausstoßöffnung und bildet einen feinen Sprühkegel. Der Durchmesser des auf eine Unterlage aufgesprühten Sprühkegels hängt vom Abstand der Ausstoßöffnung zur Unterlage ab. Durch geeignete Wahl dieses Abstands zur Unterlage und durch die Einstellung der Nadel in der Ausstoßöffnung läßt sich der Farbsprühkegel über einen verhältnismäßig weiten Bereich einstellen.

Ein Nachteil der bekannten Air-Brush besteht darin, daß diese bislang noch nicht computergesteuert zum Einsatz gebracht werden konnte.

Aus der DE-C1-37 29 208 ist bereits eine Schneidvorrichtung für Folien bekannt, mit der Buchstaben, Zeichen o.ä. aus einer zweischichtigen Folie ausgeschnitten werden können, um auf diese Weise Schilder, Masken für Mal- und Sprüharbeiten, Schriftzüge u.a. herzustellen. Die bekannte Schneidvorrichtung besitzt dazu ein Gehäuse mit zwei im Abstand zueinander angeordneten Wangen, zwischen denen die Folienbahn von Traktoren geführt wird. Zwischen den Wangen erstrecken sich Führungsstangen, auf denen ein das Schneidwerkzeug tragender Schlitten montiert ist. Der Schlitten wird damit quer über die Bahn in Y-Richtung bewegt. In X-Richtung erfolgt die Bewegung der Folienbahn durch die Traktoren, die die Bahn in gesteuerter Weise nicht nur vor-, sondern auch zurückbewegen können.

Aus der US-A-4,467,525 ist eine ähnliche Schneidvorrichtung bekannt, bei der außerdem das Schneidwerkzeug durch ein Schreibwerkzeug ersetzt werden kann. Auch bei dieser bekannten Vorrichtung wird der Schlitten von einem Steuergerät elektronisch gesteuert. Mit diesem bekannten Gerät kann aber nur entweder geschnitten oder gezeichnet werden.

Ein Nachteil der bekannten Schneidvorrichtungen besteht darin, daß diese entweder nur schneiden oder nur zeichnen können, wobei im Zeichenbetrieb bislang keine Air-Brush zum Einsatz kam, da diese wegen ihrer Farb- und Luftanschlüsse nicht ohne weiteres in den Schlitten einer Schneidvorrichtung eingesetzt werden konnte, wie dies beispielsweise für einen Tuscheschreiber möglich ist.

Es ist daher **Aufgabe** der Erfindung, eine Vorrichtung zu schaffen, mit der eine Folie in einem Arbeitsgang mit einer Sprühvorrichtung beschriftet und anschließend in gesteuerter Weise ausgeschnitten werden kann, wobei das Programm zur Steuerung des Schneidwerkzeugs für die Steuerung des Sprühkopfs nur geringfügig abgewandelt werden soll.

Zur **Lösung** dieser Aufgabe dienen die Merkmale des Patentanspruchs 1.

Da der Sprühkopf der erfindungsgemäßen Vorrichtung auf der gleichen X-Position wie das Messer der an sich bekannten Schneidvorrichtung sitzt, braucht das Steuerungsprogramm für den Sprühkopf ausgehend von dem Steuerungsprogramm für das Schneidmesser nur geringfügig geändert zu werden.

Ein weiterer Vorteil der Erfindung besteht darin, daß sich der Sprühkopf schnell und unkompliziert austauschen läßt, wenn Störungen auftreten sollten oder wenn eine neue Farbe gewünscht wird.

Die Erfindung wird im folgenden anhand von Figuren näher erläutert; es zeigen:
- Figur 1: eine perspektivische Darstellung eines ersten Ausführungsbeispiels;
- Figur 2: eine schematische Ansicht eines Sprühkopfs aus Figur 1;
- Figur 3: eine schematische Draufsicht auf den Sprühkopf von Figur 2;
- Figur 4: eine perspektivische Darstellung eines zweiten Ausführungsbeispiels;
- Figur 5: eine perspektivische Darstellung des Sprühkopfs aus Figur 4;
- Figur 6: eine schematische Ansicht des Sprühkopfs aus Figur 5; und
- Figur 7: eine schematische Draufsicht auf den Sprühkopf von Figur 5.

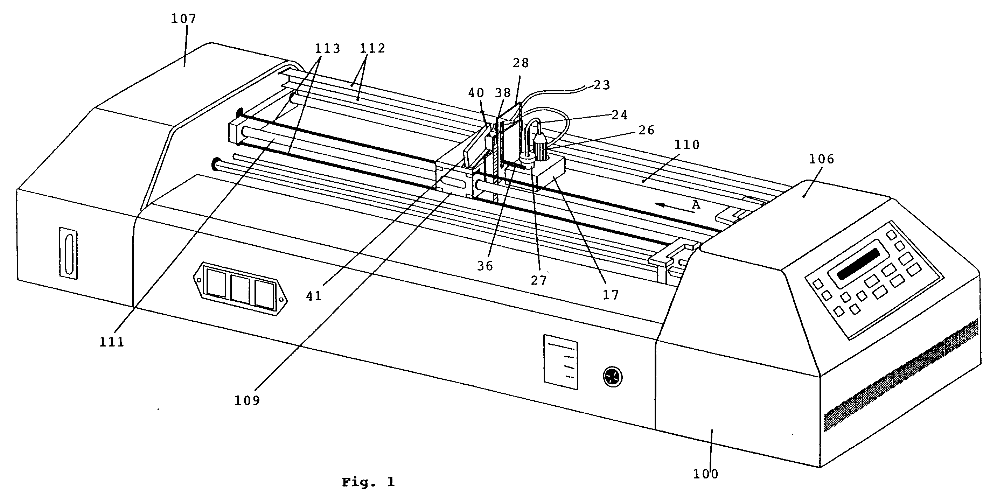

Die in **Figur 1** dargestellte Vorrichtung ähnelt in ihrem Grundaufbau der Schneidvorrichtung aus der DE-C1-37 29 208, so daß weder Einzelheiten der Steuerung noch Erläuterungen über die Eingabe der Steuerbefehle o.ä. erforderlich sind. Auf die erwähnte Patentschrift wird jedoch ausdrücklich Bezug genommen.

Wie in Figur 1 gezeigt ist ein Gehäuse 100 vorgesehen, das zwei seitliche Wangen 106, 107 aufweist, zwischen denen sich Führungsstangen 110 und 111 für einen entlang dieser Führungsstangen bewegbaren Schlitten 109 befinden. Am Schlitten 109 sind ein endloser Zahnriemen 112 und ein Zugseil 113 befestigt, die in nicht dargestellter, jedoch üblicher Weise dazu dienen, den Schlitten 109 in gesteuerter Weise entlang den Führungsstangen 110, 111 hin- und herzubewegen.

Die Bewegung des Schlittens 109 wird durch Befehle gesteuert, die über eine nicht dargestellte, an sich bekannte Tastatur, die in üblicher Weise mittels eines Kabels und eines Steckers an die Schneidvorrichtung angeschlossen ist, in das nicht dargestellte Steuerwerk der Vorrichtung eingegeben werden. Das Steuerwerk steht außerdem mit Programmkassetten in Verbindung, die auswechselbar sind und über die beispielsweise Schriftarten und Symbole erzeugt werden können. Das Steuerwerk kann demjenigen aus der US-A-4,467,525 entsprechen. Es wird darauf hingewiesen, daß an Stelle der Programmkassetten auch ein Computer angeschlossen sein kann, über dessen Bildschirm die Steuerbefehle angezeigt werden können.

Unterhalb des Schlittens 109 befindet sich eine Trägerwalze, über die in ebenfalls nicht dargestellter, jedoch beispielsweise in der US-A-4,467,525 entsprechenden Weise eine Bahn aus einzuschneidendem Material, üblicherweise eine zweischichtige Kunststoffolie geführt und während des Bearbeitungsvorganges durch Hin- und Herbewegung mittels nicht dargestellter Traktoren in einer Koordinate (X-Richtung) des herzustellenden Schnittverlaufs bewegt wird, wobei die Trägerwalze um ihre Längsachse eine entsprechende Drehbewegung ausführt.

Im Schlitten 109 ist in einer nicht dargstellten Führungsbuchse ein Schneidwerkzeug in Z-Richtung und damit in der Längsachse der Führungsbuchse hin und her bewegbar und zusätzlich drehbar gelagert, so daß das an seinem vorderen Ende vorgesehene Schneidelement zwischen einer angehobenen Stellung und einer abgesenkten Arbeitsstellung bewegbar ist. In dieser Stellung steht das Schneidelement in Schneideingriff mit dem auf der Trägerwalze befindlichen Folienmaterial. Einzelheiten sind in der DE-C1-37 29 208 erläutert.

Am Schlitten 109 ist ferner ein schwenkbarer, einarmiger Hebel 41 befestigt, der an seinem freien Ende eine Stellschraube 40 trägt. Die Stellschraube 40 dient dazu, die Anpreßkraft auf ein Magnetventil 38 einzustellen, mit dem die Luftzufuhr über einen Luftschlauch 23 zu einem Sprühkopf 27 erfolgt. Dem Sprühkopf wird außerdem noch Farbe, Tinte, Tusche oder Klebstoff von einem daneben angeordneten Farbbehälter 26 über einen Farbschlauch 24 zugeführt. Gehalten werden der Sprühkopf 27 und der Farbbehälter 26 von einer Halterung 17, die als Block an einem in vertikaler Richtung verstellbaren Schuber 28 angebracht ist. Die Höhe des Sprühkopfs 27 über dem Folienmaterial wird durch eine Klemmschraube 36 von Hand festgelegt.

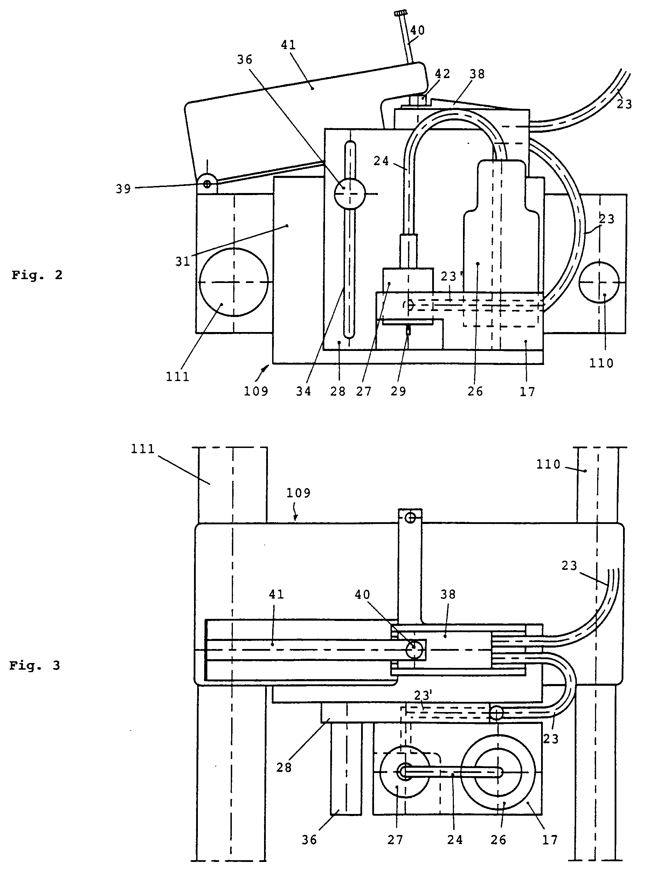

**Figur 2** zeigt eine Ansicht des Schlittens 109 in Richtung des Pfeils A von Figur 1. Man erkennt dabei den in der Halterung 17 sitzenden und von dieser getragenen Sprühkopf 27, der in schematischer Darstellung ein Sprühröhrchen 29 an seiner Unterseite erkennen läßt. Der Sprühkopf 27 arbeitet nach dem Venturi-Prinzip. An sein oberes Ende schließt ein Farbschlauch 24 an, der in einen Farbbehälter 26 führt. Der Farbbehälter 26 wird, wie bereits erwähnt, ebenfalls von der Halterung 17 getragen. Die Versorgung des Sprühkopf 27 mit Druckluft von etwa 0,5 bis 2,5 bar erfolgt über einen in die Halterung 17 eingearbeiteten Luftkanal 23', an den der Luftschlauch 23 anschließt. Der Luftschlauch 23 führt jedoch nicht direkt zu einer Druckluftquelle, sondern erst unter Zwischenschaltung des Magnetventils 38, das die Zufuhr von Druckluft zum Sprühkopf 27 steuert. Die Lage des Magnetventils 38 ist in der Draufsicht von **Figur 3** am besten zu erkennen.

Die Steuerung des Magnetventils 38 erfolgt über einen Hebel 41, der an einem Zapfen 39 an einer Seite des Schlittens 109, und zwar in der Nähe Zugseils 113 schwenkbar befestigt ist. Der Hebel 41 ist damit ein einarmiger Hebel, der mit seinem freien Ende auf einen Betätigungsstift 42 des Magnetventils 38 drückt und dieses damit öffnet oder schließt.

Durch das freie Ende des Hebels 41 ist außerdem eine Stellschraube 40 geschraubt, die den Betätigungsstift 42 kontaktiert und damit die Größe der Anpreßkraft des Hebels 41 gegenüber dem Magnetventil 38 steuert. Angezogen wird der Hebel 41 von einem in der Zeichnung nicht dargestellten Hubmagneten, der in Figur 2 etwa im Bereich des Langlochs 34 vertikal montiert ist und der bei der Verwendung als Schneidvorrichtung die auf das Messer wirkende Blattfeder anzieht oder freigibt.

**Figur 2** läßt außerdem erkennen, wie der Schuber 28 in vertikaler oder Z-Richtung gegenüber dem Schlitten 109 verstellbar ist, nämlich durch Lösen der Klemmschraube 36, die durch das Langloch 34 des Schubers 28 greift und diesen an einer am Schlitten 109 seitlich angebrachten Rückwand 31 festklemmt.

**Figur 3** zeigt die in Verbindung mit Figur 2 erwähnten Teile in der Draufsicht, wobei insbesondere die Zuführung der Luft durch den Luftschlauch 23 und den Luftkanal 23' deutlich erkennbar ist. In der Luftleitung liegt also das Magnetventil 38, das von dem Hebel 41 betätigt wird.

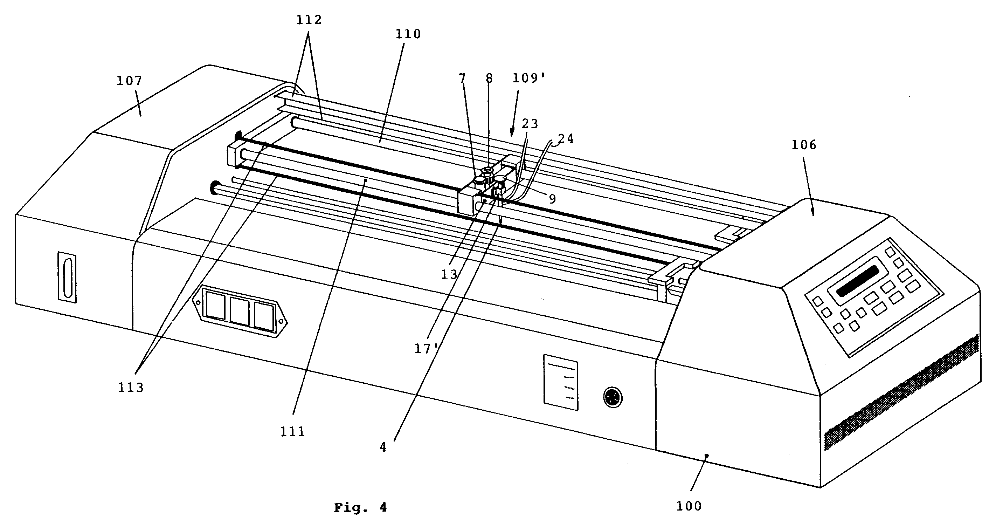

**Figur 4** zeigt ein zweites Ausführungsbeispiel, bei dem gleiche Teile wie bei dem ersten Ausführungsbeispiel mit gleichen Bezugszeichen versehen sind. Eine erneute Beschreibung dieser Teile erübrigt sich daher. Der wesentliche Unterschied zu dem ersten Ausführungsbeispiel besteht im Aufbau des Schlittens 109, der bei dem zweiten Ausführungsbeispiel daher mit einem Apostroph bezeichnet ist. Bei dem ersten Ausführungsbeispiel wird der Sprühkopf 27 von Hand in seiner Höhe verstellt, während dies bei dem zweiten Ausführungsbeispiel durch eine Elektromotor erfolgt.

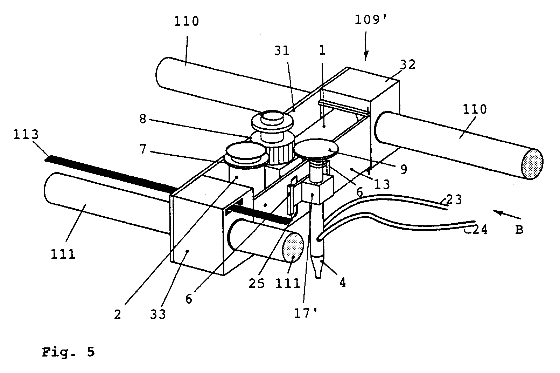

In **Figur 4** ist der Sprühkopf 4 als Air-Brush dargestellt, die von einer Halterung 17' an einer Sprühträgerplatte 13 gehalten wird. Die Düsennadel der Air-Brush wird von einem DüsennadelZahnrad 9 in axialer Richtung und damit in vertikaler oder Z-Richtung verstellt. Das Düsennadel-Zahnrad 9 kämmt mit einem Mitnehmerblock-Zahnrad 8, das seinerseits von einem Ritzel 7 angetrieben wird. Einzelheiten des Schlittens 109' sind in Figur 5 besser erkennbar.

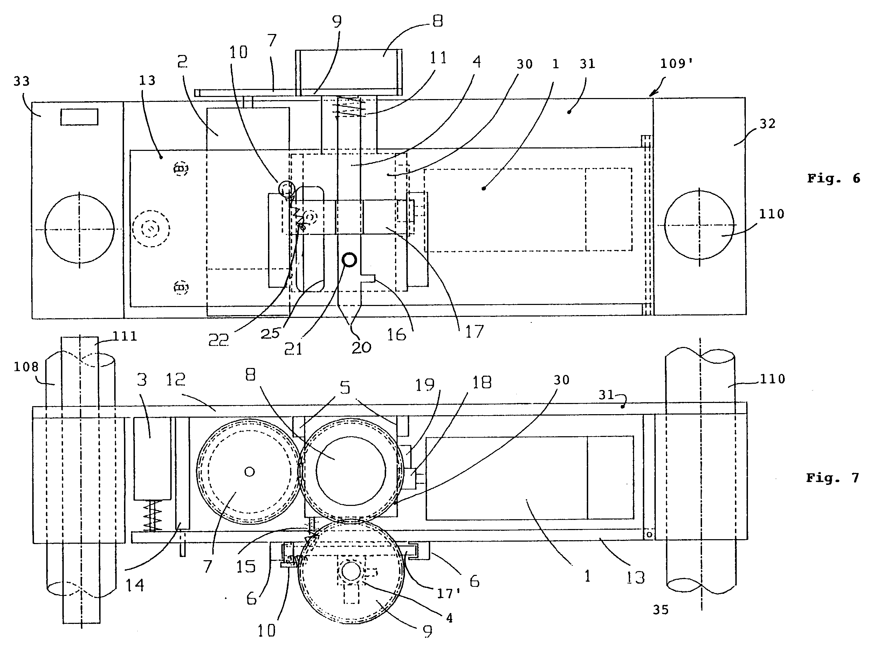

**Figur 5** zeigt also einen Ausschnitt aus Figur 4 in perspektivischer Darstellung, wobei man erkennt, wie der Schlitten 109' auf den Führungsstangen 110 und 111 gleitet. Es ist auch ein Teil des Zugseils 113 erkennbar. In dem dargestellten Ausführungsbeispiel wird der Schlitten 109' von zwei Blöcken 32 und 33 gebildet, die an einer Seite durch eine Rückwand 31 und an der anderen Seite durch eine Sprühträgerplatte 13 miteinander verbunden sind. Die Rückwand 31 trägt den Mitnehmerblock 30 und den Motor 2 sowie einen in **Figur 7** erkennbaren Hubmagneten 3, während die Halterung 17' für den Sprühkopf 4 und damit der Sprühkopf selbst von der Sprühträgerplatte 13 getragen werden. **Figur 5** zeigt auch deutlich, wie die Halterung 17' für den Sprühkopf 4 in Sprühkopfführungen 6 in Z-Richtung verschiebbar ist. Auf die Bewegungsverhältnisse wird anschließend an die Erläuterungen der **Figuren 6** und **7** eingegangen. Es sei noch erwähnt, daß die Luftzufuhr durch den Luftschlauch 23 und die Farbzufuhr durch den Farbschlauch 24 erfolgt.

**Figur 6** zeigt eine Ansicht des Sprühkopf 109' in Richtung des Pfeils B von Figur 5 gesehen. Man erkennt die beiden Blöcke 32 und 33, die auf den Führungsstangen 110 und 111 sitzen beziehungsweise von diesen getragen werden. Die Rückwand 31 verbindet die beiden Blöcke 32 und 33 an der in **Figur 5** linken Seite des Schlittens 109'. Die Vorderseite des Schlittens 109' wird von einer etwas kleineren Sprühträgerplatte 13 gebildet, die am rechten Block 32 über ein Scharnier 35 angelenkt ist und damit nach vorn geklappt werden kann. Gehalten wird die Sprühträgerplatte 13 in der Nähe des linken Blocks 33 von einem Hubmagneten 3, der an der Rückwand 31 verankert ist und die Sprühträgerplatte 13 anzieht. Die Stärke der Anzugskraft wird durch einen justierbaren Anschlag 14 begrenzt, der ebenfalls in der Rückwand 31 verankert ist und durch die Sprühträgerplatte 13 greift.

Die Rückwand 31 trägt außerdem vertikale Führungen 5 für den Mitnehmerblock 30, der in den Führungen in senkrechter oder Z-Richtung verschiebbar ist. Der Mitnehmerblock 30 ist am besten in der Draufsicht von **Figur 7** erkennbar. Er weist an seiner rechten Seite eine ebenfalls senkrechte Zahnstange 19 auf, die mit dem Ritzel 18 eines Z-Motors 1 kämmt. Der Z-Motor 1 ist dazu entweder am rechten Block 32 oder ebenfalls an der Rückwand 31 befestigt. Die Art der Befestigung stellt für den Fachmann keine Schwierigkeiten dar. Wenn also der Z-Motor 1 angesteuert wird, so dreht sich sein Ritzel 18 und bewegt je nach Drehrichtung den Mitnehmerblock 30 in den Führung 5 nach oben oder nach unten. Diese Z-Bewegung wird auf den Sprühkopf 4 übertragen, und zwar durch einen Mitnehmerstift 15, der durch einen in der Sprühträgerplatte 13 vorgesehenen Mitnehmerschlitz 25 ragt und die Halterung 17' des Sprühkopfs 4 erfaßt. Wenn also der Mitnehmerblock 30 auf und ab bewegt wird, so bewegen sich gleichzeitig die Halterung 17' und der Sprühkopf 4 mit. Der Mitnehmerstift 15 ist in der dargestellten Ausführungsform federnd montiert, beispielsweise indem der Stift sich mehr oder weniger tief in den Mitnehmerblock 30 hinein bewegen kann, aber von einer nur angedeuteten Druckfeder immer in eine vorgespannte Stellung bewegt wird. Dadurch kann der Mitnehmerstift 15 die Schwenkbewegungen der Sprühträgerplatte 13 ausgleichen.

An der Rückwand 31 ist noch ein weiterer Motor 2 montiert, dessen Drehachse ebenfalls senkrecht steht und dessen Abgabewelle ein in der Horizontalebene liegendes Ritzel 7 trägt. Mit dem Ritzel 7 kämmt ein auf dem Mitnehmerblock 30 montiertes dickes Zahnrad 8, das seinerseits das Düsennadel-Zahnrad 9 des Sprühkopfs 4 treibt.

Schließlich ist an der Vorderseite der Sprühträgerplatte 13 ein Anschlag 10 für eine Rückholfeder 22 vorgesehen, die mit ihrem anderen Ende an der Halterung 17' angreift und damit den Sprühkopf 4 normalerweise nach oben zieht. Eine ähnliche Rückholfeder 11 umgibt das obere Ende des Sprühkopfs 4 und stellt die Düsennadel immer in eine Grundstellung zurück, wenn vom Motor 2 kein Drehmoment ausgeübt wird. Der Luftschlauch 23 wird an einen Luftanschluß 16, der Farbschlauch 24 an einen Farbanschluß 22 angeschlossen. Gesprüht wird aus der Düse 20.

### Arbeitsweise

Der Schlitten 109' wird von dem Zugseil 113 oder einem nicht dargestellten Zahnriemen in die gewünschte Y-Richtung bewegt. Die X-Richtung wird durch die Bewegung des unter dem Schlitten 109' hindurchgeführten Folienmaterials bestimmt. Die Breite des vom Sprühkopf 4 gesprühten Sprühkegels wird durch die Höhe des Sprühkopfs gegenüber dem Folienmaterial bestimmt, so daß der Sprühkopf 4 angehoben oder abgesenkt werden muß. Dies erfolgt durch Aktivierung des Z-Motors 1, der den Mitnehmerblock 30 anhebt oder absenkt und gleichzeitig damit über den Mitnehmerstift 15 den Sprühkopf 4 in Z-Richtung bewegt. Durch Ansteuerung des weiteren Motors 2 wird das Mitnehmerblock-Zahnrad 8 gedreht, das mit dem Düsennadel-Zahnrad 9 kämmt und auf diese Weise die Düsennadel mehr oder weniger tief in den Sprühkopf 4 hineindreht, um die Zufuhr von Farbe oder Druckluft zu steuern. Die Dicke oder Höhe des Mitnehmerblock-Zahnrads 8 ist so bemessen, daß beim Anheben oder Absenken des Mitnehmerblocks 30 durch den Z-Motor 1 das Zahnrad 8 stets in kämmendem Eingriff mit dem Ritzel 7 des Motors 2 bleibt. Die Höhe oder Dicke des Zahnrads 8 ist außerdem so bemessen, daß in beiden Endstellung der Düsennadel, also bei völlig geöffneter oder vollständig geschlossener Düse des Sprühkopfs 4 immer ein kämmender Eingriff des Düsennadel-Zahnrads 9 mit dem Mitnehmerblock-Zahnrad 8 bestehen bleibt. Damit kann also das Ritzel 7 des Motors 2 die Düsennadel vollständig auf- oder zufahren, ohne daß sich die Stellung des Mitnehmerblocks 30 zu verändern braucht. Umgekehrt kann der Mitnehmerblock 30 in jeder Stellung der Düsennadel und damit in jeder Stellung des Ritzels 7 ganz nach oben oder unten gefahren werden.

Da bei einer an sich bekannten Schneidvorrichtung zwei Ansteuerungssignale zur Verfügung stehen, wenn das Schneidmesser durch einen Sprühkopf ersetzt ist, können die beiden Motoren 1 und 2 also ohne Schwierigkeiten angesteuert werden.

## Patentansprüche

1. Sprühvorrichtung für Flüssigkeiten wie Farbe, Tinte, Tusche oder Klebstoff, zum Besprühen von Folienmaterial, das in einer Folienschneidvorrichtung zuvor geschnitten wird, wobei die Folienschneidvorrichtung ein Gehäuse (100) aufweist, welches Führungsstangen (111, 112) trägt, die sich quer über die Bewegungsrichtung des Folienmaterials erstrecken und auf denen ein Schlitten (109) quer zur Bewegung des Folienmaterials in Y-Richtung verschiebbar ist; mit einer Transporteinrichtung zum Transportieren des Folienmaterials in X-Richtung unter dem Schlitten (109) hindurch; und mit einem Steuerwerk, das den Schlitten (109) und die Transporteinrichtung steuert und damit zwischen dem Schlitten (109) und dem Folienmaterial Bewegungen in X- und Y-Richtung bewirkt, wobei das Steuerwerk über ein Tastenfeld von einem Computer oder einer ähnlichen EDV-Einrichtung angesteuert wird, **dadurch gekennzeichnet,** daß an dem Schlitten (109) ein Sprühkopf (27) mit einem zugehörigen Farbbehälter (26) angeordnet ist, und daß ein Magnetventil (38) die Zufuhr von Druckluft zu dem Sprühkopf (27) steuert.

2. Sprühvorrichtung nach Anspruch 1, **dadurch gekennzeichnet,** daß der Sprühkopf (27), das Magnetventil (38) und der Farbbehälter (26) an einem Schuber (28) montiert sind, der seitlich am Schlitten (109) festklemmbar ist.

3. Sprühvorrichtung nach Anspruch 2, **dadurch gekennzeichnet,** daß der Schuber (28) in Führungseinrichtungen des Schlittens (109) in X-Richtung einsteckbar ist.

4. Sprühvorrichtung nach Anspruch 3, **dadurch gekennzeichnet,** daß die Führungseinrichtungen des Schlittens (109) ein vertikaler Schlitz (34) ist.

5. Sprühvorrichtung nach einem der Ansprüche 1-4, **dadurch gekennzeichnet,** daß der Schuber (28) durch eine Klemmschraube (36) am Schlitten (109) festklemmbar ist.

6. Sprühvorrichtung nach Anspruch 1, **dadurch gekennzeichnet,** daß an dem Schlitten (109) ein Sprühkopf (4) angeordnet ist, der durch einen Z-Motor (1) in der Höhe gegenüber dem Folienmaterial verstellbar ist.

7. Sprühvorrichtung nach Anspruch 6, **dadurch gekennzeichnet,** daß der Z-Motor (1) einen in Führungen (5) in der Z-Achse geführten Mitnehmerblock (30) über eine daran angebrachte Zahnstange (19) durch sein Ritzel (18) treibt.

8. Sprühvorrichtung nach Anspruch 7, **dadurch gekennzeichnet,** daß der Mitnehmerblock (30) einen Mitnehmerstift (22) trägt, der durch einen Mitnehmerschlitz (25) in einer Sprühträgerplatte (13) ragt und eine Sprühträgerhalterung (17) trägt.

9. Sprühvorrichtung nach Anspruch 8, **dadurch gekennzeichnet,** daß die Sprühträgerhalterung (17) in an der Sprühträgerplatte (13) befestigten Sprühkopfführungen (6) durch den Z-Motor (1) in Z-Richtung verstellbar ist.

10. Sprühvorrichtung nach einem der Ansprüche 6-9, **dadurch gekennzeichnet,** daß der Sprühkopf (4) nach dem Venturi-Prinzip arbeitet.

11. Sprühvorrichtung nach einem der Ansprüche 6-9, **dadurch gekennzeichnet,** daß der Sprühkopf (4) eine Air-Brush mit verstellbarer Düsennadel ist.

12. Sprühvorrichtung nach Anspruch 11, **dadurch gekennzeichnet,** daß die Düsennadel an ihrem oberen, freien Ende ein Zahnrad (9) trägt, das von einem weiteren Motor (2) angetrieben wird.

13. Sprühvorrichtung nach Anspruch 12, **dadurch gekennzeichnet,** daß der Antrieb des Düsennadel-Zahnrads (9) von dem Ritzel (7) des weiteren Motors (2) unter Zwischenschaltung eines dicken, geradverzahnten Zahnrads (8) erfolgt, das eine Anhebung oder Absenkung des Mitnehmerblocks (30) und/oder des Sprühkopfs (4) erlaubt, ohne den Eingriff von Ritzel (7), Zahnrad (8) und Düsennadel-Zahnrad (9) aufzuheben.

14. Sprühvorrichtung nach einem der Ansprüche 6-13, **dadurch gekennzeichnet,** daß die Sprühträgerplatte (13) an einer Seite in der Nähe der einen Führungsstange (110) um eine senkrechte Achse schwenkbar an dem Schlitten (109) angelenkt ist und an der anderen Seite in der Nähe der anderen Führungsstange (111) von einem Hubmagneten (3) und gegebenenfalls von zumindest einem justierbaren Anschlag (14) gehalten wird.
